# EUROPEAN PATENT SPECIFICATION

(11) **EP 2 843 208 B1**
(45) Date of publication and mention of the grant of the patent: **12.12.2018**
(21) Application number: 13781544.5
(22) Date of filing: 23.04.2013
(51) Int. Cl.: F02B 11/00, F02D 43/00, F02D 19/06

(54) **HYBRID COMBUSTION CONTROL METHOD OF INTERNAL COMBUSTION ENGINE AND CONTROLLER THEREOF, INTERNAL COMBUSTION ENGINE, AND AUTOMOBILE**
HYBRIDES VERBRENNUNGSSTEUERUNGSVERFAHREN FÜR EINEN VERBRENNUNGSMOTOR UND STEUERUNG DAFÜR, VERBRENNUNGSMOTOR UND AUTOMOBIL
PROCÉDÉ DE COMMANDE DE COMBUSTION HYBRIDE DE MOTEUR À COMBUSTION INTERNE ET DISPOSITIF DE COMMANDE ASSOCIÉ, MOTEUR À COMBUSTION INTERNE ET AUTOMOBILE

(30) Priority: 23.04.2012 CN 201210119430
(43) Date of publication of application: 04.03.2015
(73) Proprietor: Beijing Endeavour Technology Co., Ltd., Beijing 100088 (CN)
(72) Inventor: ZHOU, Xiangjin, Beijing 100728 (CN)
(74) Representative: CPW GmbH
(86) International application number: PCT/CN2013/074571
(87) International publication number: WO 2013/159695

(56) References cited:
- EP-A2- 1 085 192
- EP-A2- 1 365 134
- WO-A1-02/077429
- CN-A- 101 016 868
- CN-A- 101 473 126
- CN-A- 102 312 719
- GB-A- 2 329 937
- US-A- 3 945 352
- US-B1- 6 230 683
- LI, DONGSHENG. ET AL.: 'Experimental Research on Mode Switch in a Multi-Cylinder HCCI Engine.' TRANSACTIONS OF CSICE. vol. 30, no. 2, March 2012, pages 113 - 117, XP008175330

## Description

### FIELD OF THE INVENTION

The invention relates to the field of an internal combustion engine of the mechanical industry, and more particularly to a method for achieving a hybrid combustion mode of an internal combustion engine, as well as a controller, an internal combustion engine, and a vehicle using the method for achieving a hybrid combustion mode.

### BACKGROUND OF THE INVENTION

An internal combustion engine generally consists of major components including a cylinder, a piston, a connecting rod, a crankshaft, air valves, an oil pump, a nozzle, and accessories.

In general, a typical diesel engine is ignited using a compression ignition mode. The ignition timing is often determined by the fuel injection timing. The fuel injection timing generally occurs in the compression stroke, specifically, the injection timing occurs when the piston reaches close to the top dead center with an angle of between 6 and 30 degrees.

A typical gasoline engine is ignited using a spark ignition mode, where the high octane number gasoline is employed(such as 95#, 98# gasoline of 89#, 92#, 95#, 98# gasoline), so that the compression ratio of the cylinder is slightly improved, the thermal power conversion efficiency of the engine is enhanced, and the knocking is prevented to the utmost. The fuel injection timing of the gasoline generally occurs in the suction stroke. For a small number of gasoline engines, there occur two fuel injection timings at the initiating stage, one is in the suction stroke, and the other is in the compression stroke, where the piston reaches close to the top dead center with an angle of around 60 degrees.

In contrast to engines with a spark ignition mode, engines with a nonhomogeneous charge compression ignition mode have a much higher air inflating efficiency. Thus, the compression ratio is improved, the thermal power conversion efficiency is enhanced, and the knocking is prevented. A typical nonhomogeneous charge compression ignition engine is a diesel engine, and the ignition and combustion thereof are related to the process of diffusion and compression ignition, which is a nonhomogeneous combustion and lean combustion mode, that is to say, the combustion is accompanied by the diffusion of the fuel in the air. Atypical spark ignition engine is a gasoline engine, and the combustion thereof is a homogeneous combustion of a pre-mixture of fuel and air. The combustion lasts a long time. However, the knocking tends to happen at the later period of the combustion.

With the development of low-octane gasoline and the engines using the same, the nonhomogeneous charge compression ignition mode is employed, thereby achieving a lean combustion. Because the gasoline has a longer ignition delay period than diesel oil, the compression ignition gasoline engine works softer than the diesel engine. In addition, tests show that the efficiency and the fuel economy of the low-octane compression ignition gasoline engine are superior to that of the diesel engine. The low-octane compression ignition gasoline engine is a novel internal combustion engine and is expected to substitute for the existing diesel engines and gasoline engines, which is described in Chinese Patent Application No. CN201010227388.0.

Low-octane gasoline generally refers to gasoline having an octane number (organon, RON) of less than 69, or even less than 60.

The low-octane compression ignition gasoline engine achieves the compression combustion of gasoline by improving the compression ratio (17-22) and employing low-octane gasoline.

Some existing gasoline engines are equipped with a mechanical supercharger rather other a turbocharger. When the engine works under a moderate load, the mechanical supercharger can enhance the intake pressure (1.3-1.9 kg/square centimeter) and increase the output power by 20-30% (but the thermal power conversion efficiency of the engine cannot be improved, so the fuel oil cannot be saved). A small number of vehicle engines are equipped with both a mechanical supercharger and a turbocharger.

An internal combustion engine controller generally refers to a computer installed with engine management software, or an electronic control unit (ECU) of a vehicle. Generally, one controller or ECU is only installed with one set of engine management software.

### SUMMARY OF THE INVENTION

In view of the above-described problems, it is one objective of the invention to provide a method for achieving a hybrid combustion mode of an internal combustion engine so that in the working process of the internal combustion engine, both a spark ignition combustion mode and a compression ignition combustion mode are employed.

A method for achieving a hybrid combustion mode of an internal combustion engine comprises: starting up the internal combustion engine through a spark ignition combustion mode to preheat the cylinder and an air distribution system of the engine, and employing a turbocharger to improve an intake temperature and an intake pressure of the cylinder;

running the internal combustion engine through a nonhomogeneous charge compression ignition combustion mode, during which throttle valves are fully opened unless the engine flames out, and air flow of the engine is not restricted by the throttle valves, closing a decompression valve of the turbocharger, and employing the turbocharger to improve an air inflation volume thereby increasing a temperature and pressure of the combustion chamber at an end of a compression stroke of the cylinder;

periodically attempting to switch the combustion mode from the spark ignition combustion mode to the compression ignition combustion mode when the engine runs at a low load, or the conditions of compression ignition combustion mode cannot be ensured satisfied according to a water tank temperature and an upstream intake pressure of the throttle valves, maintaining the compression ignition combustion mode when working conditions for the compression ignition combustion mode are satisfied, and returning to the spark ignition combustion mode rapidly when the working conditions for the compression ignition combustion mode are not satisfied and a rotational speed of the engine decreases abnormally.

In a class of this embodiment, the internal combustion engine comprises a fuel direct injection device and/or the turbocharger and/or a mechanical supercharger.

In a class of this embodiment, a gasoline-like fuel having an octane number of less than 60 is employed.

The invention also provides an internal combustion engine controller adapting to control above method for achieving a hybrid combustion mode of an internal combustion engine.

In a class of this embodiment, a fuel selection switch is disposed on the controller to switch the engine management mode from the spark ignition combustion mode into the hybrid combustion mode, the spark ignition combustion mode corresponds to high-octane gasoline, and the hybrid combustion mode corresponds to low-octane gasoline. Correspondingly, the controller is installed with two software comprising spark ignition mode control software and hybrid combustion mode control software (two engine management modes).

The invention further provides an internal combustion engine employing a method for achieving a hybrid combustion mode of an internal combustion engine.

In a class of this embodiment, the internal combustion engine comprises a fuel selection switch for the selection of the spark ignition combustion mode and the hybrid combustion mode, the spark ignition combustion mode corresponds to high-octane gasoline, and the hybrid combustion mode corresponds to low-octane gasoline. When the spark ignition combustion mode is selected, high octane gasoline is used in the engine or vehicle. When the hybrid combustion mode is selected, low octane gasoline is used in the engine or vehicle. When an electronic control unit (ECU) of a vehicle comprising the two engine management modes is substituted for the existing ECU of a vehicle comprising a fuel direct injection device and a turbocharger (and/or a mechanical supercharger), the vehicle can utilize high octane gasoline and works according to the spark ignition combustion mode (which is the same as common vehicles and engines), the switch points to spark ignition (or high octane), or utilize low octane gasoline and works according to the hybrid combustion mode (the engine works through the compression ignition combustion mode most of the time, the thermal power conversion efficiency of the engine is improved), the switch points to hybrid combustion (or low octane).

The invention still provides a vehicle comprising an above-mentioned controller and an internal combustion engine.

The method is described in detail as follows.

In the initiating stage of the internal combustion engine (gasoline engine), the spark ignition combustion mode is employed to preheat the cylinder and an air distribution system of the engine, and a turbocharger is employed to improve an intake temperature and an intake pressure of the cylinder, thereby improving the temperature of the combustion chamber. After starting up the engine, the cylinder temperature and the upstream intake pressure of the throttle valves (behind the turbocharger) are enhanced. When the combustion chamber temperature at the end of the compression stroke of the engine satisfies the conditions for the compression ignition of the low octane gasoline, the nonhomogeneous charge compression ignition combustion mode is employed.

In the working process, due to the fluctuation of the working conditions, the intake pressure changes, the combustion chamber temperature cannot meet the working conditions for the compression ignition combustion mode, and then the spark ignition combustion mode is employed to ensure the normal working of the engine. When the engine works in a low load, for example, in the idle state, the intake pressure provided by the turbocharger is very low, and then the spark ignition combustion mode is employed to ensure the normal working of the engine. If the fuel is low octane gasoline (low burning point), even in the idle state, the conditions for compression ignition can also be satisfied, then the compression ignition combustion mode is employed. In general, in the idle state, the turbocharger can produce an intake pressure of 1.1 kg/square centimeter. Under such conditions, to ensure the compression ignition at different compression ratio and environmental temperature, the specific octane value of low octane gasoline must be definite, which can be determined according to existing experiments and calibration methods in the prior art.

The hybrid combustion mode comprises two different combustion modes, that is, spark ignition or compression ignition, which are carried out separately at different conditions. The two ignition modes can be alternate as needed, which are different from a single diffusion compression ignition, different from a single spark ignition, and also different from homogenous charge compression ignition (HCCI). The homogenous charge compression ignition (HCCI) is difficult to control, and is only suitable for a narrow load, so it is very difficult for popularization.

Different from other technologies, the hybrid combustion mode has the following two characteristics. The first, the main combustion is achieved by a non-homogeneous charge compression ignition. The second, the fuel is low octane gasoline. The octane number of typical low octane gasoline is 30, 40, 55, 60, and 69. Different from Chinese Patent Application No. 201010227388.0, the hybrid combustion mode employs a traditional spark ignition combustion mode (or an improved spark ignition combustion mode with a delayed fuel injection time) at the initiating stage and low load stage, or a low octane compression ignition gasoline engine is provided with a mechanical supercharger. The spark ignition combustion mode and the compression ignition combustion mode have both been disclosed by the prior art.

The objectives of the invention are summarized as follows.
1. To expand the applicable range of the compression ratio of the low octane compression ignition gasoline engine, so that the engines or vehicles having low compression ratio (10 or 10.5) can utilize low octane gasoline (in general, gasoline with octane number less than 0 is very difficult for production, however gasoline fuel with octane number of 0, -10, or -20 or lower can be obtained in the laboratory), with a compression ignition combustion mode.
2. To expand the applicable range of the octane number of the low octane gasoline, so that the low octane gasoline having a relatively high octane number (55, or 60) can be applied to a low octane compression ignition gasoline engine.
3. To expand the applicable range of the ambient temperature of a low octane compression ignition gasoline engine, so that the low octane compression ignition gasoline engine can achieve cold start-up and normal operation at extremely low temperatures.

For engines having a low compression ratio, for example, existing direct injection gasoline engines having a compression ratio of about 10 (such as 9.6, 10. 10.5, and 11), which are equipped with a turbocharger, they can be ignited using a compression ignition mode to achieve lean combustion and stratified combustion thereby improving the efficiency of the engine and fuel economy (improve the output power and the maximum output torque, or reduce the fuel consumption under the same output power). Thus, before the low octane compression ignition gasoline engine and vehicles with high compression ratio is substituted for existing gasoline engines and vehicles, the existing gasoline engines and vehicles can be still consumed, the efficiency of the existing engines and the fuel economy are improved, as well as the utilization efficiency of social resources (engines or vehicles). In summary, according to the present invention, the existing vehicles can utilize low octane gasoline by the compression ignition combustion mode most of the time.

In the initiating stage of the engine, the turbocharge has not been supplied with enough waste gas, and the intake pressure of the engine is less than one atmosphere. If the compression ratio of the cylinder is low, for example, less than or equal to 10.5, low octane gasoline, for example, with an octane number of 30, cannot be ignited by the compression ignition mode. The spark ignition combustion mode can ensure the combustion at the initiating stage. The air-fuel ratio can be controlled by controlling the opening degree of the throttle valves and fuel injection amount (the prior art).

After starting up the engine, the turbocharger works normally. Under large load, the turbocharge can supply the cylinder with an intake pressure of more than 1-7-1.8 atmospheric pressure (1.7-1.8 kg/square centimeter) (all the throttle valves are open, and the decompression valves of the turbocharger is closed or abolished). Under such conditions, with regard to a cylinder having a compression ratio of 10, the temperature in the combustion chamber is equivalent to that of a cylinder having a compression ratio of 16-17 by means of natural aspiration, which satisfies the spontaneous combustion condition of the low octane gasoline (for example, has an octane number of 30), so that the compression ignition combustion mode is achieved. Thus, at most of the time, for the spontaneous combustion condition of the low octane gasoline is satisfied, the engine is ignited by the non-homogeneous charge compression ignition mode thereby achieving the stratified combustion and lean combustion, and preventing the knocking, and then preventing the restriction to intake pressure from the knocking. The engine can fully utilize the highest intake pressure and maximum intake volume supplied by the turbocharger thereby improving the inflation efficiency and the inflation amount, and improving the engine efficiency and the fuel economy.

When the engine works at low load, the intake pressure supplied by the turbocharger cannot meet the conditions for the compression ignition mode. Thus, the homogeneous spark ignition mode or the homogeneous charge compression ignition (HCCI) mode is employed, thereby forming a hybrid combustion mode comprising the homogeneous spark ignition mode, the diffusion compression ignition mode, and the homogeneous charge compression ignition (HCCI) mode. The above mentioned three combustion modes all belong to the prior art. And the methods for measuring the ignition reliability of the three ignition modes have been disclosed by the prior art.

The homogeneous charge compression ignition mode of the invention refers to a relatively homogenous mixed state. For example, the fuel oil is first injected in the compression stroke when the piston reaches the top dead center with an angle of between 45 and 30 degrees. The injection timing is followed by the ignition timing of the spark plug, which delays an angle of 21-39 degrees (crankshaft rotation angle), and is almost 6 degrees (±3 degrees) before the piston reaches the top dead center. At this moment, the fuel has been diffused into the air around the spark plug, but not yet completely diffused into the whole air. A local fuel-air ratio is about 7-11. The fuel-air mixture is ignited by the spark plug, and the resulting flames extend whereby improving the temperature and pressure in the cylinder. The unignited fuel continues diffusing in the air. When the temperature satisfies the spontaneous ignition point of the fuel, the fuel is ignited by itself at multiple points thereby accelerating the combustion. Ideally, the fuel is completely combusted as possibly to yield carbon dioxide and water before being diluted by the air, and no knocking happens. In the whole process, the air intake flow is not regulated by the throttle valves. The homogenous combustion is actually a non-homogenous combustion, which is specifically a lean combustion and stratified combustion. In contrast to HCCI, the combustion mode of the invention has advantages of controllable ignition timing and broad load range. The above mentioned is a method for combining spark ignition and homogenous charge compression ignition. For each do-work cycle, after a fuel is injected and compressed air is introduced, an air-fuel mixture around a sparking plug is ignited, with the diffusion of flames, an air temperature in a cylinder increases to satisfy the spontaneous combustion condition of gasoline, at this moment a mixing percent of the fuel-air mixture is low and the gasoline concentration is high enough to prevent knocking, the air-fuel mixture is spontaneously ignited at the edges with low gasoline concentration, and the produced spark extends to high gasoline concentration area from outside to inside.

According to the method for achieving a hybrid combustion mode of an internal combustion engine, to flame out the engine, the throttle valves should be closed and the decompression valve of the turbocharger be opened, which is beneficial to the operation.

The hybrid combustion mode can be utilized for the preparation a novel internal combustion engine, which employs low octane gasoline as a fuel. Optionally, the novel internal combustion engine can also be obtained, by updating the computer program of existing gasoline engines comprising a fuel direct injection device and/or the turbocharger and/or a mechanical supercharger, or vehicles using the same, or by updating an electronic control unit comprising the computer program of the hybrid combustion mode in existing gasoline engines, or vehicles using the same, or by installing an electronic control unit comprising the computer program having two sets of engine management systems in existing gasoline engines, or vehicles using the same. The modified internal combustion engines employ low octane gasoline as a fuel.

Advantages of the method of the hybrid combustion mode are summarized as follows:
1. Reduce the requirement of the compression ignition fuel (such as low octane gasoline) for the compression ratio of the internal combustion engine;
2.Reduce the requirement of the engine for the low grade of low octane gasoline;
3. Improve the adaptability of the low octane compression ignition gasoline to environment temperature, thereby achieving cold start at low temperatures.

When the engine is running under a spark ignition combustion mode, the air intake volume and the air-fuel ratio are regulated by the throttle valves, which has been disclosed in the prior art. To prevent the spontaneous combustion and being ignited in advance, the injection timing is postponed in the spark ignition combustion mode. Specifically, the fuel injection is not activated until the piston in the compression stroke reaches close to the top dead center with an angle of between 60 and 30 degrees. In the dragging stage, the fuel injection is activated when the piston in the compression stroke reaches close to the top dead center with an angle of between 60 and 45 degrees, and the electronic ignition is activated when the piston in the compression stroke reaches close to the top dead center with an angle of about 12 (± 3) degrees. In the idle or low load stage, the fuel injection is activated when the piston in the compression stroke reaches close to the top dead center with an angle of between 45 and 30 degrees, and the electronic ignition is activated when the piston in the compression stroke reaches close to the top dead center with an angle of about 6 (± 3) degrees. When the knocking is detected, the electronic ignition timing is postponed according to conventional methods (the prior art), so is the injection timing. That is to say, the postponed angle for the electronic ignition is the same as that for the injection timing (based on the formerly postponed angle).

The hybrid combustion mode may have the following disadvantages. At the initiating stage of the engine, or when the engine runs at a low load stage, a short time of knocking may happen with the control method of spark ignition combustion mode. In the prior art, postponing the ignition timing can eliminate or buffer the knocking. The methods for detecting the knocking and how to postpone the ignition timing have all been disclosed by the prior art.

When the combustion mode shifts from the spark ignition mode to the compression ignition mode, the throttle valves are opened to the extreme, and the injection timing of the low octane gasoline is postponed until the piston in the compression stroke reaches close to the top dead center with an angle of between 16 and 12 degrees (the specific injection timing is determined, optimized, and selected according to the vehicle model, the parameters (e.g., the compression ratio), working conditions, load, ambient temperature, the octane number of low octane gasoline, and exhaust emissions. The determination, optimization and selection all belong to the prior art). The electronic ignition timing is postponed until the piston in the working stroke reaches close to the top dead center with an angle of between 5 and 15 degrees, so as to improve the reliability of the compression ignition (this is just a safe mode, in case the compression ignition mode cannot be achieved, the electronic spark ignition can be used to ignite the mixture of oil and gas). The decompression valve of the turbocharger is shut down or turned down, so that the pressure limit of the pressure-limiting valve for air compression behind the turbo is improved, for example, to be 2.5 or 3.2 kg/square centimeter. The specific pressure should be determined by the strength of the turbocharger and air pipeline.

The prior art has disclosed the spark ignition combustion mode, air-fuel ratio, compression ignition combustion mode, and the determination and optimization of the relevant parameters. One of ordinary skill in the art knows how to compose computer program to control the hybrid combustion mode, and knows how to manufacture and assemble a vehicle computer comprising the program, without any creative labor. It is also well known to one of ordinary skill in the art to manufacture and install a controller comprising two sets of engine management program, and to dispose a transfer switch in an engine. The transfer switch can also be disposed in the driving cab of a vehicle, which is connected to a controller (or an electronic control unit) via wires.

Table 1 shows a required gasoline octane number corresponding to engines with different compression ratio and different ignition modes at different ambient temperatures, which is resulted from a series of experiments. The data may not be absolutely applied to all kinds of engines. The specific gasoline octane number required by an engine at different working conditions can be determined through experiments.

**Table 1 Required gasoline octane number corresponding to engines with different compression ratio and different ignition modes at different ambient temperatures**

| Compression ratio | Gasoline octane number | | | | | | | |
|---|---|---|---|---|---|---|---|---|
| | Ambient temperature ≥ 20°C | | Ambient temperature 0-20°C | | Ambient temperature -20-0°C | | Ambient temperature -40- -20°C | |
| | Normal compression ignition mode | Hybrid combustion mode | Normal compression ignition mode | Hybrid combustion mode | Normal compression ignition mode | Hybrid combustion mode | Normal compression ignition mode | Hybrid combustion mode |
| 9 | | 10 | | 5 | | 0 | | -5 |
| 9.6 | | 15 | | 10 | | 5 | | 0 |
| 10 | | 20 | | 15 | | 10 | | 5 |
| 10.5 | | 25 | | 20 | | 15 | | 10 |
| 11 | | 30 | | 25 | | 20 | | 15 |
| 12 | -20 | 40 | | 35 | | 30 | | 25 |
| 15 | 10 | 49 | -20 | 44 | | 39 | | 34 |
| 17 | 30 | 55 | 0 | 50 | | 45 | | 40 |
| 18 | 40 | 60 | 10 | 55 | -20 | 50 | | 45 |
| 19 | 50 | 65 | 20 | 60 | -10 | 55 | | 50 |
| 20 | 60 | 69 | 30 | 55 | 0 | 60 | | 55 |

When the compression ignition low octane gasoline engine is equipped with a mechanical supercharger, the compressed air pressure in the cylinder can be increased thereby benefiting the cold start of the engine, increasing the air temperature at end of the compression stroke of the cylinder, and enhancing the reliability of compression ignition of the fuel. The mechanical supercharger, the turbocharger, and the hybrid combustion mode can constitute four combinations.

Advantages of the invention are summarized as follows:
1. Existing direct injection gasoline engines (the compression ratio of 9-11) comprising a turbocharger can be transformed into a compression ignition low octane gasoline engine using hybrid combustion control method by updating the computer program thereof, no need to modify the physical structure of the engine and vehicle, thereby greatly improving the engine efficiency, reducing the fuel consumption, and preventing the knocking. It should be noted that, the low octane gasoline is employed.

If a fuel selection switch is disposed on a vehicle, and meanwhile two sets of engine management program are installed in the electronic control unit (one is a normal program provided by the manufacturer, the other is a hybrid combustion program of the invention), the vehicle can utilize both conventional high octane gasoline (such as #93 gasoline, #95 gasoline, and #98 gasoline) and low octane gasoline (such as #20 gasoline, #15 gasoline, and #10 gasoline, the gasoline can be selected according to the compression ratio and rating test results). If the low octane gasoline is employed, at most of the time (especially with a heavy load), the engine can work under a compression ignition combustion mode, thereby improving the thermal power conversion efficiency of the engine, reducing fuel consumption, or improving engine output and maximum output torque under the same fuel consumption. After the fuel tank is filled with high octane gasoline or low octane gasoline, the fuel selection switch is operated to select "high" or "low", which enables the electronic control unit to manage the engine in a conventional mode, or in a hybrid combustion mode.
2. The low octane gasoline engine with a cylinder having high compression ratio (for example, 17-22) can achieve the cold start at low temperatures, which is very difficult for Chinese Patent Application No.CN201010227388.0 to achieve.

The technical solutions of the invention are summarized as follows:
1. A method for achieving a hybrid combustion mode of an internal combustion engine, comprises starting up the internal combustion engine through a spark ignition combustion mode to preheat the cylinder and an air distribution system of the engine, and employing a turbocharger to improve an intake temperature and an intake pressure of the cylinder; running the internal combustion engine through a nonhomogeneous charge compression ignition combustion mode, during which throttle valves are opened unless the engine flames out, so that air flow of the engine is not restricted by the throttle valves, closing a decompression valve of the turbocharger, and employing the turbocharger to improve an air inflation volume thereby increasing a temperature and pressure at an end of a compression stroke of the cylinder; employing low octane gasoline, and gasoline pump and gasoline nozzle and a fuel storage and delivery system of gasoline;

periodically attempting to switch the combustion mode from the spark ignition combustion mode to the compression ignition combustion mode when the engine runs at a low load, or the conditions of compression ignition combustion mode cannot be ensured satisfied according to a water tank temperature and an upstream intake pressure of the throttle valves, maintaining the compression ignition combustion mode when working conditions for the compression ignition combustion mode are satisfied, and returning to the spark ignition combustion mode rapidly when the working conditions for the compression ignition combustion mode are not satisfied and a rotational speed of the engine decreases abnormally.
2. According to claim 1, an electronic control unit program comprising the method for achieving a hybrid combustion mode of an internal combustion engine, or an electronic control unit comprising the program comprising the method for achieving a hybrid combustion mode of an internal combustion engine.
3. An internal combustion engine adopting the method for achieving a hybrid combustion mode of an internal combustion engine, and a vehicle comprising the same.
4. According to claim 1 or 2, the computer program is utilized to update the existing gasoline engines or vehicles comprising a direct injection device and a turbocharger and/or a mechanical supercharger, so that the existing gasoline engines can consume low octane gasoline, and when the load is large, the compression ignition combustion mode is activated, thereby improving thermal power conversion efficiency of the gasoline engine or vehicles using the same.
5. According to claim 4, a fuel selection switch is disposed, two sets of engine management program are installed in the electronic control unit, or the electronic control unit comprising two sets of engine management program is updated, so that existing gasoline engines or vehicles comprising a direct injection device and a turbocharger and/or a mechanical supercharger can consume both the high octane gasoline and low octane gasoline.
6. A compression ignition low-octane gasoline engine having a mechanical supercharger and a vehicle comprising the same, the mechanical supercharger supplying compressed air for the engine, the engine employing low-octane gasoline having an octane number of less than 60;
   a compression ignition low-octane gasoline engine having a mechanical supercharger and a vehicle comprising the same, the engine and the vehicle comprising a mechanical supercharger and being provided with a hybrid combustion mode;
   a compression ignition low-octane gasoline engine having a mechanical supercharger and a vehicle comprising the same, the engine and the vehicle comprising a mechanical supercharger and a turbocharger;
   a compression ignition low-octane gasoline engine having a mechanical supercharger and a vehicle comprising the same, the engine and the vehicle comprising a mechanical supercharger and a turbocharger, and being provided with a hybrid combustion mode.

For a low-octane gasoline engine comprising a mechanical supercharger and a turbocharger, the mechanical supercharger operates to supply 1.5 kg/square centimeter of compressed air at low speed and low load. When the turbocharger starts to supply intake air with high pressure, the power transmission system of the mechanical supercharger detaches with the power output system of the gasoline engine, and thus the work stops. When the gasoline engine is at an idle state or runs at a low load, the pressure of the compressed air supplied by the turbocharger is very low, for example, less than 1.5 kg/square centimeter, the mechanical supercharger starts to work.
7. According to claim 5, an electronic control unit (with hardware) adapting to be installed with two sets of engine management program, or an electronic control unit (with software and hardware) installed with two sets of engine management program, the fuel selection switch (program selection switch) controls the shift of the two sets of engine management program, or, the fuel selection switch(program selection switch) is disposed on the electronic control unit and is not necessarily disposed in the driving cab, thereby preventing misoperation.

### DETAILED DESCRIPTION OF THE EMBODIMENTS

While particular embodiments of the invention have been shown and described below, it will be obvious to those skilled in the art that changes and modifications may be made without departing from the invention in its broader aspects, and therefore, the aim in the appended claims is to cover all such changes and modifications as fall within the true spirit and scope of the invention.

For further illustrating the invention, experiments detailing a method for achieving a hybrid combustion mode of an internal combustion engine are described below. It should be noted that the following examples are intended to describe and not to limit the invention.

### Example 1

A direct injection gasoline engine comprising a turbocharger and having a compression ratio of 10 (or 9.6, or 10.5, or 11) is equipped with a vehicle-mounted device capable of controlling the hybrid combustion mode (for a vehicle-mounted device of a common vehicle, for example, an electronic control unit, only the spark ignition combustion mode is provided, without compression ignition mode). At the initiating stage of the engine, the spark ignition mode is employed, and the air intake volume is regulated by a throttle valve. The fuel-air ratio is controlled at about 14.7 as possibly. After the temperature of the engine rises and the turbocharger works normally thereby improving the upstream intake pressure of the throttle valve, the compression ignition combustion mode is activated, and the decompression valve of the turbocharger is shut down or abolished, so that the maximum inlet pressure and maximum air intake flow of the turbocharger are all used for aeration. When the temperature of the water tank reaches 90°C, the ambient temperature is over 10°C, and the intake pressure reaches over 1.7 kg/square centimeter, the vehicle (engine) having a compression ratio of 10 can utilize gasoline having an octane number of less than or equal to 30 (specific octane number gasoline should be determined according to different types of vehicles, and cannot be determined only by the compression ratio of the engine) to achieve the compression ignition mode, thereby greatly improving the thermal power conversion efficiency of the engine.

Existing vehicles have a compression ratio of around or over 10. The method of the invention can be used to update the computer program of the existing vehicles thereby providing the vehicles with a hybrid combustion mode, thus saving the fuel consumption, and reducing the carbon dioxide emissions.

To ensure the reliability of the compression ignition, and apply the compression ignition combustion mode before the upstream intake pressure of the throttle valve reaches 1.7 kg/square centimeter, the octane number of the gasoline can be further reduced, for example, employ gasoline having an octane number of 20, 15, 10, or 0.

In this example, when the engine works at a low load, the turbocharging effect leaves much to be desired. When the upstream intake pressure is less than 1.7 kg/square centimeter, the engine is ignited through a spark ignition mode.

When the ambient temperature is much lower, or the gasoline has a much higher octane number, or the waste gas is insufficient due to a low load thereby producing low intake pressure, during the shift of the combustion mode from the spark ignition to the compression ignition, the rotational speed of the engine should be carefully observed to detect whether the compression ignition is achieved. If the compression ignition fails, the rotational speed of the engine will decrease abnormally, the spark ignition combustion mode should be adopted immediately, until the above three conditions for the compression ignition combustion mode are all satisfied.

Because the compression ratio of the conventional engine cylinders is low thereby resulting in unsatisfactory thermal power conversion efficiency, the technical solution of this example is just a transition. Newly-produced vehicles, without any doubt, should employ engines having high compression ratio (for example, 17-22 12-14, or 14-17) so as to make full use of low octane gasoline.

To ensure the smooth transition of existing engines, a controller (or an electronic control unit) comprising two sets of engine management modes is disposed in the engines. The controller comprises a transfer switch to select one of the two management modes. When the transfer switch points to the "mixed" or "low octane gasoline", the engines or vehicles are ignited through a hybrid combustion mode. When the transfer switch points to the "spark ignition" or "high octane gasoline", the engines or vehicles are conventional engines or vehicles ignited spark ignition combustion mode.

The controller or electronic control unit comprising two sets of engine management modes can enable a common vehicle (or engine) to consume conventional gasoline, or to consume low octane gasoline whereby transforming the conventional vehicle into a dual-fuel vehicle (or engine).

### Example 2

A direct injection gasoline engine comprising a turbocharger and having a compression ratio of 18 is provided and the computer program thereof is modified (for a vehicle-mounted device of a common vehicle, only the spark ignition combustion mode is provided, without the compression ignition mode). At the initiating stage of the engine, the spark ignition mode is employed, and the air intake volume is regulated by a throttle valve. After the temperature of the engine rises and the turbocharger works normally thereby improving the upstream intake pressure of the throttle valve, the compression ignition combustion mode is activated, and the decompression valve of the turbocharger is shut down or abolished, the throttle valves are completely opened, that the maximum intake pressure and maximum air intake flow of the turbocharger are all used for aeration. The gasoline having an octane number of 40 is consumed.

Experiments show that, when the ambient temperature is at minus 14 degrees (experiments show that the limiting application temperature can reach at minus 50 degrees (-50°C)), the engine can be ignited by a spark ignition combustion mode for normal start. When the water tank temperature reaches 60°C, the ambient temperature is -14°C, and the intake pressure is over 1.1 kg/square centimeter, the combustion mode of the engine can shift from a spark ignition mode to a compression ignition mode. Thus, the thermal power conversion efficiency of the engine is greatly improved. When the engine runs at idle state or at low load, the engine can also be ignited by a compression ignition mode. When the engine is still active (the water tank temperature is over 60°C), the spark ignition mode can be omitted and the compression ignition mode can be directly introduced. When the water tank temperature is 20°C and the spark ignition mode is employed at the initiating stage, the fuel consumption is 0.9 liter/hour at the idle state. When the water tank temperature is 90°C and the engine runs through a compression ignition mode, the fuel consumption is 0.5 liter/hour at the idle state. Obviously, a large amount of fuel is saved.

### Example 3

A gasoline engine (used for vehicle) comprising a mechanical supercharger is provided with a compression ratio of 10 (or 9.6, or 10.5 or 11). In the initiating stage, the mechanical supercharger supplies compressed air having a pressure of above 1.7-1.9 kg/square centimeter for the cylinder.

To modify the computer program of the engine, so that the injection timing(location) occurs when the piston reaches close to the top dead center with an angle of 16 degrees (the injection timing varies with the changes of the working conditions and load), and the throttle valves are completely opened. The electronic ignition timing is postponed to the working stroke when the piston has passed the top dead center with an angle of between 5 and 15 degrees. Thus, a conventional gasoline engine consuming high octane number gasoline is transformed into a compression ignition low gasoline engine. The compression ignition low gasoline engine can consume low octane gasoline having an octane number of less than 30 under an ambient temperature of over 20°C to achieve cold start.

If the computer program of the compression ignition low gasoline engine is updated to have a hybrid combustion mode, the engine can achieve cold start under an ambient temperature of over minus 20°C(-20°C).

If a novel electronic control unit (soft ware and hard ware) comprising a fuel selection switch and two engine management modes, that is, a conventional spark ignition mode and a hybrid combustion mode, is employed to substitute the electronic control unit (vehicle) of a conventional engine, the (vehicle) engine can consume both common gasoline and low octane gasoline, with no need to change the physical structure of the (vehicle) engine.

## Claims

1. A method for achieving a hybrid combustion mode of an internal combustion engine, the method comprising:
directly injecting a fuel into a cylinder;
starting up the internal combustion engine through a spark ignition combustion mode to preheat the cylinder and an air distribution system of the engine, and employing a turbocharger to improve an intake temperature and an intake pressure of the cylinder;
running the internal combustion engine through a nonhomogeneous charge compression ignition combustion mode, during which throttle valves are opened unless the engine flames out, so that air flow of the engine is not restricted by the throttle valves, closing a decompression valve of the turbocharger, and employing the turbocharger to improve an air inflation volume thereby increasing a temperature and pressure at an end of a compression stroke of the cylinder;
periodically attempting to switch the combustion mode from the spark ignition combustion mode to the compression ignition combustion mode when the engine runs at a low load, or the compression ignition combustion mode cannot be ensured according to a water tank temperature and an upstream intake pressure of the throttle valves, maintaining the compression ignition combustion mode when working conditions for the compression ignition combustion mode are satisfied, and returning to the spark ignition combustion mode when the working conditions for the compression ignition combustion mode are not satisfied and a rotational speed of the engine decreases abnormally; wherein a gasoline having octane number of less than 69 is employed.

2. The method of claim 1, wherein the internal combustion engine comprises a fuel direct injection device and/or the turbocharger and/or a mechanical supercharger.

3. The method of claim 1 or 2, wherein a homogeneous spark ignition mode is employed when the engine works at low load and the intake pressure supplied by the turbocharger cannot meet the conditions for the compression ignition mode.

4. The method of claim 1 or 2, wherein a combination of spark ignition and homogenous charge compression ignition is employed when the engine works at low load and the intake pressure supplied by the turbocharger cannot meet the conditions for the compression ignition mode.

5. The method of claim 4, wherein the combination of spark ignition and homogenous charge compression ignition includes that for each do-work cycle, after a fuel is injected and compressed air is introduced, an air-fuel mixture around a sparking plug is ignited, with the diffusion of flames, an air temperature in a cylinder increases to satisfy the spontaneous combustion condition of gasoline, at this moment a mixing percent of the fuel-air mixture is low and the gasoline concentration is high enough to prevent deflagration or knocking, the air-fuel mixture is spontaneously ignited at the edges with low gasoline concentration, and the produced spark extends to high gasoline concentration area from outside to inside.

6. An internal combustion engine or vehicle controller adapted to control a method for achieving a hybrid combustion mode of an internal combustion engine of any one of claims 1-5.

7. The internal combustion engine or vehicle controller of claim 6, wherein a fuel selection switch is disposed on the controller to switch the combustion mode from the spark ignition combustion mode into the hybrid combustion mode, the spark ignition combustion mode corresponds to high-octane gasoline, and the hybrid combustion mode corresponds to low-octane gasoline.

8. An internal combustion engine employing a method for achieving a hybrid combustion mode of an internal combustion engine of any one of claims 1-5.

9. The internal combustion engine of claim 8, comprising a fuel selection switch for the selection of the spark ignition combustion mode and the hybrid combustion mode, the spark ignition combustion mode corresponds to high-octane gasoline, and the hybrid combustion mode corresponds to low-octane gasoline.

10. A vehicle comprising a controller of claim 6 or 7 and an internal combustion engine of claim 8 or 9.

## Patentansprüche

1. Verfahren zum Erreichen eines hybriden Verbrennungsmodus eines internen Verbrennungsmotors, wobei das Verfahren Folgendes umfasst:
direktes Einspritzen eines Kraftstoffs in einen Zylinder;
Starten des internen Verbrennungsmotors durch einen Funkenzündungsverbrennungsmodus zum Vorwärmen des Zylinders und eines Luftverteilungssystems des Motors und Einsetzen eines Turboladers zum Verbessern einer Ansaugtemperatur und eines Ansaugdrucks des Zylinders;
Betreiben des internen Verbrennungsmotors durch einen inhomogenen Kompressionszündungsmodus, während dem bei Nichtabreißen der Flamme im Motor Drosselklappen geöffnet werden, sodass der Luftstrom des Motors nicht durch die Drosselklappen eingeschränkt wird, Schließen eines Dekompressionsventils des Turboladers und Einsetzen des Turboladers zum Verbessern eines Luftfüllvolumens, wodurch Temperatur und Druck am Ende eines Verdichtungstakts des Zylinders erhöht werden;
periodisches Versuchen, den Verbrennungsmodus vom Funkenzündungsverbrennungsmodus in den Kompressionszündungsmodus umzuschalten, wenn die Motorlast niedrig ist oder der Kompressionszündungsmodus aufgrund einer Wassertanktemperatur und einem Ansaugdruck vor den Drosselklappen nicht aufrechterhalten werden kann, Aufrechterhalten des Kompressionszündungsmodus, wenn die Arbeitsbedingungen für den Kompressionszündungsmodus erfüllt werden, und Rückkehren in den Funkenzündungsverbrennungsmodus, wenn die Arbeitsbedingungen für den Kompressionszündungsmodus nicht erfüllt werden und eine Motordrehzahl ungewöhnlich stark abnimmt; wobei ein Ottokraftstoff mit einer Oktanzahl von weniger als 69 eingesetzt wird.

2. Verfahren nach Anspruch 1, wobei der interne Verbrennungsmotor eine Kraftstoffdirekteinspritzvorrichtung und/oder den Turbolader und/oder einen mechanischen Lader umfasst.

3. Verfahren nach Anspruch 1 oder 2, wobei ein homogener Funkenzündungsmodus eingesetzt wird, wenn die Motorlast niedrig ist und der vom Turbolader bereitgestellte Ansaugdruck die Bedingungen für den Kompressionszündungsmodus nicht erfüllen kann.

4. Verfahren nach Anspruch 1 oder 2, wobei eine Kombination aus Funkenzündung und homogener Kompressionszündung eingesetzt wird, wenn die Motorlast niedrig ist und der vom Turbolader bereitgestellte Ansaugdruck die Bedingungen für den Kompressionszündungsmodus nicht erfüllen kann.

5. Verfahren nach Anspruch 4, wobei die Kombination aus Funkentzündung und homogener Kompressionszündung beinhaltet, dass nach dem Einspritzen eines Kraftstoffs und dem Einleiten von Druckluft für jeden Arbeitszyklus ein Kraftstoff/Luft-Gemisch um eine Zündkerze gezündet wird, dass durch die Ausbreitung der Flammen eine Lufttemperatur in einem Zylinder ansteigt, um die Bedingung für die spontane Selbstzündung von Ottokraftstoff zu erfüllen, dass zu diesem Zeitpunkt ein Mischungsverhältnis des Kraftstoff/Luft-Gemischs niedrig ist und die Ottokraftstoff-Konzentration hoch genug ist, um eine Deflagration oder ein Klopfen zu verhindern, dass an den Rändern mit niedriger Ottokraftstoff-Konzentration eine spontane Selbstzündung des Kraftstoff/Luft-Gemischs erfolgt und dass der erzeugte Funke sich von außen nach innen in den Bereich mit hoher Ottokraftstoff-Konzentration ausbreitet.

6. Interner Verbrennungsmotor oder Fahrzeugsteuerung, die geeignet sind, ein Verfahren zum Erreichen eines hybriden Verbrennungsmodus eines internen Verbrennungsmotors nach einem der Ansprüche 1-5 zu steuern.

7. Interner Verbrennungsmotor oder Fahrzeugsteuerung nach Anspruch 6, wobei auf der Steuerung ein Kraftstoff-Wahlschalter angeordnet ist, um den Verbrennungsmodus vom Funkenzündungsverbrennungsmodus in den hybriden Verbrennungsmodus zu schalten, wobei der Funkenzündungsverbrennungsmodus für Ottokraftstoff mit hoher Oktanzahl vorgesehen ist und der hybride Verbrennungsmodus für Ottokraftstoff mit niedriger Oktanzahl vorgesehen ist.

8. Interner Verbrennungsmotor, bei dem ein Verfahren zum Erreichen eines hybriden Verbrennungsmodus in einem internen Verbrennungsmotor nach einem der Ansprüche 1-5 eingesetzt wird.

9. Interner Verbrennungsmotor nach Anspruch 8, umfassend einen Kraftstoff-Wahlschalter für die Auswahl des Funkenzündungsverbrennungsmodus und des hybriden Verbrennungsmodus, wobei der Funkenzündungsverbrennungsmodus für Ottokraftstoff mit hoher Oktanzahl vorgesehen ist und der hybride Verbrennungsmodus für Ottokraftstoff mit niedriger Oktanzahl vorgesehen ist.

10. Fahrzeug, umfassend eine Steuerung nach Anspruch 6 oder 7 und einen internen Verbrennungsmotor nach Anspruch 8 oder 9.

## Revendications

1. La méthode de commande de combustion hybride pour un moteur à combustion interne, comprend :
Une injection directe dans un cylindre de carburant ;
Lors du démarrage du moteur à combustion interne, l'utilisation de la commande de combustion à allumage est activée, réchauffer le cylindre de moteur et le système de distribution de gaz, et augmenter en même temps la température d'air d'admission et la pression d'admission du cylindre par le turbocompresseur ;
Lorsque le moteur à combustion interne fonctionne, la commande de combustion à allumage par compression non homogène est activée ; le moteur à combustion interne est dans le mode de fonctionnement de commande de combustion par compression, sauf l'opération de l'arrêt du moteur, les volets de gaz sont tous ouverts pour ne pas les utiliser à commander la limitation du gaz, et ne pas fonctionner la commande de la pression d'échappement au turbocompresseur, augmenter le volume de gaz, la température et la pression de la chambre de combustion à la fin de la course de compression du cylindre en utiliser le turbocompresseur ;
Lorsque le moteur à combustion interne est à faible charge, ou il est incapable de confirmer les conditions d'allumage de la combustion sous pression par la température du réservoir et la pression d'admission derrière le volet de gaz, le mode de combustion transforme régulièrement de l'allumage à l'allumage par compression. S'il est entré dans le mode de contrôle de la combustion à l'allumage par compression avec succès, l'état de commande de combustion à l'allumage par compression continue. Si au contraire, la vitesse du moteur est anormalement faible, il est donc entrée directement dans le mode de commande de combustion à allumage ;
La méthode dite applique en utilisant de l'essence ayant un indice d'octane de 69 ou moins comme carburant.

2. Selon la méthode dite dans la revendication des droits 1, ses caractéristiques consistent à ce que, ledit moteur à combustion interne est équipé du dispositif d'injection directe de cylindre de carburant et/ ou du turbocompresseur et/ ou du dispositif de pressurisation mécanique.

3. Selon la méthode dite dans la revendication des droits 1, ses caractéristiques consistent à ce que, lors du fonctionnement du moteur de combustion à faible charge, la pression d'admission fournie par le turbocompresseur ne répond pas aux conditions d'allumage par compression, le mode de commande de combustion à allumage par compression homogène est adopté.

4. Selon la méthode dite dans la revendication des droits 1, ses caractéristiques consistent à ce que, lors du fonctionnement du moteur de combustion à faible charge, la pression d'admission fournie par le turbocompresseur ne répond pas aux conditions d'allumage par compression, le mode de commande de combustion à allumage par compression homogène de l'allumage de bougie est adopté.

5. Selon la méthode dite dans la revendication des droits 4, ses caractéristiques consistent à ce que, la méthode de commande de combustion à allumage par compression homogène dudit allumage de bougie est : pour chaque cycle de travail d'une force, après l'injection du carburant dans l'air comprimé, de l'huile et du gaz mélangés près des bougies seront allumés par la bougie d'allumage, avec la diffusion des flammes, la température d'air à l'intérieur du cylindre augmente, qui atteint les conditions d' allumage spontané d'essence. Pourtant, à ce moment, le rapport mélange huile-gaz est faible, la concentration en essence est élevée et il n'y a pas de déflagration ni de cognement. Premièrement, l'huile s'enflamme automatiquement à plusieurs endroits dans la zone marginale à faible concentration, et la flamme se propage de l'extérieur vers l'intérieur à la zone la plus forte concentration d'essence.

6. Un moteur à combustion interne ou un contrôleur de la voiture qui peut contrôler une certaine méthode définie dans les revendications des droits 1-5.

7. Selon le moteur à combustion interne ou le contrôleur de la voiture défini dans la revendication des droits 6, ses caractéristiques consistent à ce que, on ajoute un sélecteur de carburant sur le contrôleur, qui peut commuter entre deux modes de gestion de moteur telles que le contrôle de combustion d'allumage et le contrôle de combustion mixte, qui s'appliquent séparément aux deux carburants : essence à indice d'octane élevé et essence à faible indice d'octane.

8. Un moteur à combustion interne qui adopte une certaine méthode de commande de combustion mélangée définie dans les revendications des droits 1-5.

9. Selon la méthode dite dans la revendication des droits 8, ses caractéristiques consistent à ce que, ledit moteur à combustion interne comprend le sélecteur de carburant à choisir le mode de commande de combustion d'allumage, qui s'applique à l'essence à indice d'octane élevé, ou celui de combustion mélangée, qui s'applique à l'essence à faible indice d'octane.

10. La voiture qui équipe un contrôleur défini dans les revendications 6 ou 7, et un moteur à combustion interne défini dans les revendications des droits 8 ou 9.
